# EUROPÄISCHE PATENTSCHRIFT

(11) **EP 1 361 255 B1**
(45) Veröffentlichungstag und Bekanntmachung des Hinweises auf die Patenterteilung: **12.04.2006**
(21) Anmeldenummer: 03004183.4
(22) Anmeldetag: 27.02.2003
(51) Int. Cl.: C08L 95/00, C04B 28/02, C04B 40/06, C09D 195/00, C04B 24/36

(54) **Beschichtungsmaterial, Verwendung desselben sowie Verfahren zur Aufbringung des Beschichtungsmaterials**
Coating material, use thereof and process for applying it
Matériau de recouvrement, son utilisation et procédé pour le déposer

(30) Priorität: 06.05.2002 AT 7032002
(43) Veröffentlichungstag der Anmeldung: 12.11.2003
(73) Patentinhaber: ÖSTERREICHISCHE VIALIT GESELLSCHAFT mbH, 5280 Braunau/Inn (AT)
(72) Erfinder: Bruckbauer, Alexander, 5280 St. Peter am Hart (AT)
(74) Vertreter: Grabherr, Claudia

(56) Entgegenhaltungen:
- EP-A- 0 755 982
- WO-A-00/04096
- DE-A- 3 729 123

## Beschreibung

Die Erfindung betrifft ein reaktiv ohne Verdunstung von Lösungsmittel und mit einer Verdunstung von maximal 15 Masse% Wasser aushärtendes Beschichtungsmaterial sowie die Verwendung und ein Verfahren zum Aufbringen desselben auf Bauwerken aller Art. Es können sowohl vertikale (wie Mauem, (Trapez)bleche für Industriehallen, Fassadenelemente) als auch horizontale Flächen (wie Decken, Flachdächer, Böden, Teile von Brücken und Strassen), schräge Flächen (wie Dämme, Gerinne, Kanäle) sowie die Übergänge von verschiedenen Bauwerksteilen (wie Anschlüsse von Wänden an die Bodenplatte) erfindungsgemäß beschichtet werden.

In der Bautechnik ist es üblich, Bauwerke aus Beton oder anderen Baustoffen wie z.B. Straßenasphalt, gegen das Eindringen von Wasser auf verschiedene Weise zu beschichten. Beton, Asphalt und dergleichen ist als weitgehend starrer Baukörper für die Bildung von Rissen (Setzungs- und Spannungsrisse, statisch und thermisch bedingt) oder Löchern (Ausmagerungen) anfällig. Derartige Risse begünstigen das Eindringen von Wasser. Um das zu verhindern, werden dauerplastische oder viskoelastische Beschichtungen auf der dem eindringenden Wasser zugewandten Seite auf den Baukörper aufgebracht. Auch Bauwerke aus anderen Baustoffen, wie Holz, Ziegel, Lehm sind in gleicher oder ähnlicher Weise abzudichten.

Gemäß bisherigem Stand der Technik werden derartige abdichtende Beschichtungen auf folgende verschiedene Weise hergestellt:
a. Aufkleben oder Aufschmelzen von Bahnen oder Folien; z.B. Dachbahnen, Flämmbahnen, selbstklebende Bitumen- oder polymermodifizierte Bitumenbahnen u. a.. Das Aufbringen von Bahnen erfordert Vorarbeiten wie das Aufbringen eines Voranstriches, das Arbeiten auf Baugerüsten, das Hantieren mit offenen Flammen, das Schneiden und Überlappen der Bahnen usw.. Bei Außenarbeiten kann der Wind die Arbeiten erheblich erschweren. Durchlässe, Ecken und Kanten erschweren die Arbeiten mit Bahnen und Folien erheblich, sind häufig Schwachstellen für Undichtheiten. Die Arbeitsteams müssen handwerkliches Können besitzen, entsprechend ausgebildet sein und gut zusammenarbeiten, um fehlerfreie Arbeiten ausführen zu können.
b. Aufstreichen oder Aufspritzen von heißflüssigen thermoplastischen Stoffen, wie Bitumen, polymermodifiziertes Bitumen, Kunststoffe. Neben einer sehr aufwendigen Heißsprühtechnologie erfordern diese Arbeiten trockenes warmes Wetter, trockene Unterlagen und verursachen hohen Arbeitsaufwand und Gefährdung des Baupersonales, hohen Energieaufwand usw..
c. Aufstreichen oder Aufsprühen von lösemittelhaltigen Stoffen. Diese Methode wird aus Umweltschutzgründen (Verdunsten umweltschädigender Lösemittel aus der Beschichtung) in den letzten Jahren praktisch nicht mehr angewendet oder ist auf Kleinstbaulose beschränkt.
d. Aufstreichen oder Aufspritzen von Flüssigkeiten, zumeist Bitumenemulsionen, polymermodifizierte Bitumenemulsionen, Kunststoffdispersionen oder Naturkautschukdispersionen. Diese Art der Beschichtung kann auch auf mäßig feuchter Unterlage durchgeführt werden, es können jedoch nur dünne Schichten in einem Arbeitsgang aufgebracht werden, da einerseits das Abfließen an horizontalen Flächen dickere Schichten nicht zulässt und andererseits Wasser beim Trocknen der Schichten verdunsten muss. In der Regel enthalten,die Bindemittelsysteme etwa 30 % Wasser. Eingeschlossenes Wasser führt zu Blasenbildung und Dichtheitsfehlem. Die Schichten sind grundsätzlich durch die schäumenden Emulgatoren in den Emulsionen schaumblasenhältig und daher nicht einwandfrei störstellenfrei. Es müssen mindestens 3 bis 4 Schichten übereinander aufgebracht werden, mit zwischenzeitlicher Durchtrocknung, was zu hohem Arbeits- und Zeitaufwand führt. Die Temperatur der Unterlage muss so hoch sein, dass ein einwandfreies Verdunsten von Wasser und das Verfilmen der Emulsionspartikel gegeben ist, in der Regel mindestens +15°C. Bald nach dem Beschichten einsetzender Regen kann die noch nicht durchgetrocknete Schicht stellenweise beschädigen oder zur Gänze wegspülen, was zu weiterem Arbeitsaufwand und zu schwerbeeinträchtigenden Verunreinigungen an der Baustelle führen kann. Frost, auch kurzzeitiger Nachtfrost kann das Ergebnis schwer beeinträchtigen. Bei sehr heißem Wetter (Sonnenseite) kommt es häufig zu einer Hautbildung, wodurch Wasser in der Schicht eingeschlossen bleibt und Blasenbildung auftreten kann. Um diese Nachteile zu vermeiden, wurden zweikomponentige Sprüh-Systeme entwickelt, bei denen ein Fällmittel mitgesprüht wird (das in der Regel wiederum wasserhaltig ist), welches die Emulsionen rasch brechen lässt. Damit kann das Abfließen und Wegspülen bei Regen weitgehend verhindert werden, die Trocknungszeiten müssen aber dennoch eingehalten werden und die Mindestfilmbildungstemperaturen sind erforderlich. Auch diese Beschichtungssysteme eignen sich nicht für die kühlere Bausaison.
e. Ergänzend zum Aufbringen des abdichtenden Bindemittelfilmes, ist es in der Baupraxis häufig erforderlich, auch Wärmedämmplatten auf die Bauwerksteile aufzubringen und dauerhaft zu verkleben. Bei allen vorher geschilderten Verfahren ist es erforderlich, die Dämmplatten in weiteren aufwändigen Arbeitsschritten aufzukleben oder anzudübeln. In der Regel werden bei letzterem Verfahren die Abdichtungen mechanisch beschädigt, was zu einer Reduktion der Dichtheit führt, oder die Dämmplatten schließen Wasser aus den Klebedispersionen ein, sodass unzureichende Dauerhaftigkeit die Folge ist.

Aufgabe der vorliegenden Erfindung ist es ein Beschichtungsmaterial, eine Verwendung und ein Aufbringungsverfahren für dieses Beschichtungsmaterial zu finden, mit dem die oben genannten Nachteile vermieden werden können.

Die Aufgabe wird durch ein Beschichtungsmaterial gemäß einem oder mehreren der Ansprüche 1 bis 10, eine Verwendung gemäss einem oder mehreren der Ansprüche 11 bis 13, sowie durch ein Verfahren gemäss einem oder mehreren der Ansprüche 14 bis 16 gelöst.

Im Gegensatz zu den bisher angewendeten Verfahren kann zur Beschichtung der Bauwerksflächen das erfindungsgemäße Beschichtungsmaterial kalt bis mäßig warm, d.h. im Sommer bei herrschender Außentemperatur, in der kühlen Jahreszeit temperiert auf 25 bis 30°C, und in der besonderen Zusammensetzung gemäß Anspruch 5 und gegebenenfalls in Kombination mit einem oder mehreren der Ansprüch 6 bis 10, sogar ab einer Temperatur von +1°C, d.h. bei spätherbstlich-winterlichem Klima verarbeitet werden.

Folgende anwendungstechnische Eigenschaften und damit verbundene Vorteile des erfindungsgemäßen Beschichtungsmaterials, insbesondere des Beschichtungsmaterials gemäß Anspruch 4, im Vergleich zum bisherigen Stand der Technik können daher abgeleitet werden:
i. Da das reaktiv aushärtende Beschichtungsmaterial für die Beschichtung aus mindestens 85 bis 100 Prozent Wirksubstanz besteht, kann im Vergleich zu Emulsionssystemen bis zu Drittel des zu verarbeitenden Materials eingespart werden, um die gewünschte effektive Gesamtschichtdicke zu erreichen. Des weiteren eignet sich das Beschichtungsmaterial auch zum Vergießen bzw. Verfüllen von Rissen, Fugen, Spalten und zum Ausbilden von Anschlüssen zwischen verschiedenen Bauwerkskörpern, wie Blech, Asphalt, Bordsteinen uva..
ii. Die Nachteile durch das Verdunsten von Wasser aus der Schicht und die Einhaltung von Mindestfilmbildungstemperaturen werden gering gehalten oder fallen ganz weg, die Beschichtungen sind rasch nach dem Aufbringen (Minuten bis wenige Stunden) voll funktionstüchtig. Die Beschichtungsfilme sind dicht, da keine vom Emulgator verursachten Schaumbläschen enthalten sind.
iii. Die Wettereinflüsse sind nahezu unkritisch, da keine anfängliche Wasserverdünnbarkeit oder eine nur kurzzeitige vorliegt. Die Mindestfilmbildungstemperatur liegt aber weit unter Null °C. Daher kann das erfindungsgemäße Beschichtungsmaterial auch bei Temperaturen nahe Null °C und bei hoher Luftfeuchtigkeit, also im Spätherbst und in warmen Wintern in mitteleuropäischen Klimazonen verwendet werden.
iv. Das erfindungsgemäße Material und das erfindungsgemässe Verfahren erfordern keinerlei verbrennungsgefährdenden Arbeits-Temperaturen des Materials und bieten somit einen sehr hohen Arbeitssicherheits-Standard für das ausführende Baupersonal.
v. Das erfindungsgemäße Verfahren ermöglicht die nahtlose Herstellung einer Flüssigfolie, daher entfallen alle aufwändigen Schneide- und Überlappungsarbeiten, wie sie bei Abdichtungsbahnen erforderlich sind. Schwierige Bauwerksgeometrien wie Kanten, Ecken, Durchbrüche können daher funktionssicher und auf einfache Weise gegen Wasser abgedichtet werden.
vi. Die Aushärtungsreaktion, das heißt der Übergang von einer im kalten Zustand fließfähigen und damit kalt verarbeitbaren Konsistenz, die der eines dünnflüssigen Bienenhonigs entspricht, zu einer hochstandfesten Konsistenz, die das ausgehärtete Produkt nicht mehr von senkrechten Wänden abfließen lässt, erfolgt so rasch, dass Schichten bis zu 4 mm Dicke in einem Arbeitsgang aufgesprüht oder aufgespachtelt werden können.
vii. An das Mischungsverhältnis und an die Vermischungsintensität werden so geringe Anforderungen gestellt, dass beide Reaktivkomponenten mit einfachen Pumpensystemen (z.B. Zahnradpumpen) in die Misch-Sprühdüse gefördert werden können, dort in einen gemeinsamen Materialstrom vereinigt und auf die zu beschichtende Unterlage geschleudert werden. Schon im freien Flug beginnt die Viskositätszunahme durch die einsetzende Aushärtungsreaktion. Für Bauausführungen mit niedrigem Materialbedarf, etwa für Reparaturzwecke, eignet sich das Verfahren auch für die Konfektionierung in Kartuschenform, beispielsweise 2-Komponentenkartuschen mit Statikmischeraufsatz.
viii. Durch die weitgehend kalte Verarbeitbarkeit und gute Pumpbarkeit der beiden Reaktivkomponenten ist es arbeitstechnisch möglich, auch in unzugänglichem Gelände, wie es Baugruben häufig darstellen, mit geringstmöglichem Geräteaufwand zu arbeiten. Die Materialvorratsbehälter, Pumpen und gegebenenfalls ein Druckluftkompressor können weit von der Arbeitsfläche entfernt, auf gut zugänglichem Gelände abgestellt werden. Die Materialien können bis zu 100 Meter weit in dünnen unbeheizten Schläuchen gefördert werden, sodass das Arbeitspersonal nur die einfach gebaute und gewichtsmäßig leichte Sprühpistole (Gewicht nur wenige kg) mit 3 Schläuchen (Druckluft und 2 Materialkomponenten) handhaben muss. Die Bauausführung ist daher auf sehr wirtschaftliche Weise möglich.
ix. Durch die ausgezeichneten Hafteigenschaften der im Aushärtungszustand befindlichen erfindungsgemäßen Beschichtung können in einem Arbeitsgang in einem nachfolgenden Arbeitsschritt Dämmplatten oder -matten jeder Art, auch solche mit thermischer Empfindlichkeit oder mit Lösemittelempfindlichkeit wie Polystyrolschaumstoffplatten, verklebt werden. Ein Abdunsten von Stoffen unter den Dämmplatten ist nicht erforderlich, da die Beschichtung reaktiv und nicht destillativ aushärtet.
x. Des weiteren weist die erfindungsgemäße Beschichtung auch korrosionsschützende Eigenschaften auf, was besonders im Metallbau interessante Anwendungsmöglichkeiten eröffnet.
xi. Gegenüber reinen reaktiv aushärtenden Kunststoffsystemen, wie die etwa seit langem bekannten Acrylat-, Polyurethan- oder Epoxidharzsystemen zeichnet sich das erfindungsgemäße Verfahren, das auf bituminösen und mineralischen Rohstoffen basiert, durch sein erheblich niedrigeres Preisniveau, sowie durch seine enorm risseüberbrückenden, viskoelastischen Festkörpereigenschaften aus. Des weiteren eignen sich diese klassischen Reaktivkunstharzsysteme in der Regel nicht für das Aufbringen von Schichtstärken bis zu 4 mm in einem Arbeitsgang, da die Aushärtezeiten zu langsam sind um das Abrinnen an vertikalen Flächen zu verhindern, bei den für die Kaltverarbeitung erforderlichen niedrigen Viskositäten.

Muss die Bauführung bei tiefen Temperaturen, d.h. nahe 0°C, aber nicht bei Frosttemperaturen, erfolgen, kann das Beschichtungsmaterial gemäß Anspruch 5 und gegebenenfalls in Kombination mit einem oder mehreren der Ansprüch 6 bis 10 verwendet werden.

Das erfindungsgemässe Beschichtungsmaterial besteht für Verarbeitungstemperaturen von 25 bis 30°C vorzugsweise aus :

### Komponente A:

| |
|---|
| Bitumen, z.B. 160/220, eine entsprechend härtere Sorte oder ein Naturasphaltpulver |
| 20 - 70 M% |
| weichmachendes nichtflüchtiges Öl, z.B. ein entsprechendes Mineralöl, vegetabiles Öl oder ein daraus abgeleitetes Derivat, oder ein synthetisches Öl, das jeweils in der Lage ist, das Bitumen anzulösen |
| 10 - 60 M% |
| Füllende Zusätze wie Steinmehl, Talkum, Zement, Kalkmehl, Gips, Flugaschezement , Schlackenmehl der Eisen- oder Stahlerzeugung |
| 2 - 20 M% |
| Thixotropierende Zusätze wie Fasern, Mikrohohlkugeln aus Glas, anorganische oder organische Siliziumderivate |
| 0,1 - 5 M% |
| Haftverbessernde Zusätze wie Fettamine, Klebeharze, Wachse |
| 0,1 - 5 M% |
| Viskositätsregler, wie Polyethylenglykole, Etheralkohole oder Polyether oder höhersiedende Kohlenwasserstoffe |
| 0 - 5 M% |

### Komponente B:

| | |
|---|---|
| Synthetischer Latex oder Naturlatex, Polyvinylacetat- oder Acrylat-, Paraffin- oder Wachsemulsion | 20 - 80 M% |
| Wasser, Glycerin, Glykol | 10 - 50 M% |
| Wässrige Silikat- oder Phosphatlösungen | 0 - 30 M% |

Die Komponente A wird im Mischungsverhältnis von 100 : 1 bis 30 M% mit der Komponente B vermischt und dann mittels Spachtel, Zahnspachtel, Reibbrett rasch auf die zu beschichtende Unterlage in gleichmäßiger Schichtstärke aufgetragen. Vorzugsweise kann das Vermischen und Aufbringen auch in einem Zweikomponenten-Sprühverfahren erfolgen.

Das erfindungsgemässe Beschichtungsmaterial besteht für Verarbeitungstemperaturen nahe 0°C vorzugsweise aus:

### Komponente A:

| |
|---|
| Abmischung von Bitumen mit Wasser, vorzugsweise im Verhältnis 60 zu 40 bis 70 zu 30 |
| 50 - 100 M% |
| Synthetischer Latex oder Naturlatex, Polyvinylacetat- oder Acrylat-, Paraffin-oder Wachsemulsion |
| 0 - 50 M% |
| Viskositätsregler, wie Polyethylenglykole, Etheralkohole oder Polyether oder höhersiedende Kohlenwasserstoffe Thixotropierende Zusätze wie Fasern, Mikrohohlkugeln aus Glas, anorganische oder organische Siliziumderivate Haftverbessernde Zusätze wie Fettamine, Klebeharze, Wachse |
| 0 - 10 M% |

### Komponente B:

| | |
|---|---|
| | Füllende Zusätze wie Steinmehl, Talkum, Zement, Kalkmehl, Gips, Flugaschezement , Schlackenmehl der Eisen- oder Stahlerzeugung |
| | 20-50 M% |
| | weichmachendes nichtflüchtiges Öl, z.B. ein entsprechendes Mineralöl, vegetabiles Öl oder ein daraus abgeleitetes Derivat, oder ein synthetisches Öl, das jeweils in der Lage ist, das Bitumen anzulösen |
| | 40 - 80 M% |
| | Viskositätsregler, Dispergierhilfen, Benetzungsmittel für ölige Phasen |
| 1 0 - 10 M% | |

Die Komponente A wird im Mischungsverhältnis von 100 : 10 bis 50 M% mit der Komponente B vermischt und dann mittels Spachtel, Zahnspachtel, Reibbrett rasch auf die zu beschichtende Unterlage in gleichmäßiger Schichtstärke aufgetragen. Vorzugsweise kann das Vermischen und Aufbringen auch in einem Zweikomponenten-Sprühverfahren erfolgen.

Versuchsweise wurde auf eine vertikale Betonfläche zum Zwecke der Herstellung einer abdichtenden Beschichtung ein erfindungsgemäßes Beschichtungsmaterial bei einer Temperatur von 25°C durch Sprühen von zwei Komponenten ineinander in einer Schichtdicke von 1 bis 4 mm aufgebracht:

### Komponente A:

| | |
|---|---|
| Bitumen des Typs B 70/100 | 50 M% |
| Leinöl, Tallöl oder Holzöl | 30 M% |
| Füllstoffe wie Steinmehl, Zement,Kalkmehl | 15m% |
| Polypropylenfaser oderSteinwollfaser | 1 M% |
| Fettamin oder ein Polyaminaddukt | 2 M% |
| aliphatischesÖl | 2 M% |

### Komponente B:

| | |
|---|---|
| Synthetischer Latex oder Naturlatex | 50 M% |
| Wasser | 35 M% |
| Wasserglas oder Natriumphosphatlösung | 15 M% |

Die Komponenten A und B wurden im Verhältnis 9:1 im freien Sprühstrahl miteinander vermischt und zeigte sofort nach Auftreffen an der Wand eine standfeste, nicht mehr abfließende und nicht mehr von Wasser durchdringbare Konsistenz mit viskoelastischen Eigenschaften.

Für Bauausführungen bei tieferen Temperaturen wurden, als weiteres Ausführungsbeispiel, zwei Komponenten wie folgt miteinander vermischt:

### Komponente A:

| | |
|---|---|
| Abmischung von Bitumen mit Wasser | 50 M% |
| Synthetischer Latex oder Naturlatex | 48 M% |
| Viskositätsregler | 2 M% |

### Komponente B:

| | |
|---|---|
| Füllstoffe wie Steinmehl, Talkum, Zement | 50 M% |
| Lein-,Tall- oder Holzöl | 45 M% |
| Viskositätsregler | 5 M% |

Die Komponenten wurden im Verhältnis 100:20 vermischt und zeigten die gewünschten Eigenschaften.

## Patentansprüche

1. Reaktiv ohne Verdunstung von Lösungsmittel und mit einer Verdunstung von maximal 15 Gesamtmasse% Wasser aushärtendes Beschichtungsmaterial aus zwei Komponenten, **dadurch gekennzeichnet, dass** die erste Komponente 20 bis 70 Teilmasse% Bitumen oder Naturasphaltpulver, 10 bis 60 Teilmasse% weichmachendes nichtflüchtiges Öl, 2 bis 20 Teilmasse% Füllstoffe, 0,1 bis 5 Teilmasse% thixotropierende Zusätze, 0,1 bis 5 Teilmasse% haftverbessemde Zusätze sowie 0 bis 5 Teilmasse% Viskositätsregler, und die zweite Komponente 20 bis 80 Teilmasse% synthetischer Latex oder Naturlatex, Polyvinylacetat- oder Acrylat-, Paraffin- oder Wachsemulsion, 10 bis 50 Teilmasse% Wasser, Glycerin oder Glykol und 0 bis 30 Teilmasse% wässrige Silikat- oder Phosphatlösung enthält und dass die erste Komponente und die zweite Komponente in einem Mischungsverhältnis 100 : 1 bis 30 Massenteilen vorliegen.

2. Reaktiv ohne Verdunstung von Lösungsmittel und mit einer Verdunstung von maximal 15 Gesamtmasse% Wasser aushärtendes Beschichtungsmaterial aus zwei Komponenten, **dadurch gekennzeichnet, dass** die erste Komponente eine 60 bis 70%ige Abmischung von Bitumen mit Wasser in einer Menge von 50 bis 100 Teilmasse% , 0 bis 50 Teilmasse% synthetischer Latex oder Naturlatex, Polyvinylacetat- oder Acrylat-, Paraffin- oder Wachsemulsion und 0 bis 10 Teilmasse% Viskositätsregler, thixotropierende Zusätze und/oder haftverbessernde Zusätze und die zweite Komponente 20 bis 50 Teilmasse% Füllstoffe, 40 bis 80 Teilmasse% weichmachendes nichtflüchtiges Öl und 0 bis 10 Teilmasse% Viskositätsregler, Dispergierhilfen und/oder Benetzungsmittel für ölige Phasen enthält und dass die erste Komponente und die zweite Komponente in einem Mischungsverhältnis 100 : 10 bis 50 Massenteilen vorliegen.

3. Beschichtungsmaterial nach Anspruch 1 oder 2, **dadurch gekennzeichnet, dass** das weichmachende nichtflüchtige Öl ein Mineralöl, ein vegetabiles Öl oder ein daraus abgeleitetes Derivat oder ein synthetisches Öl ist.

4. Beschichtungsmaterial nach Anspruch 1,2 oder 3, **dadurch gekennzeichnet, dass** die Füllstoffe ausgewählt sind aus Steinmehl, Talkum, Zement, Kalkmehl, Gips, Flugaschezement und Schlackenmehl der Eisen- oder Stahlerzeugung.

5. Beschichtungsmaterial nach einem der Ansprüche 1 bis 4, **dadurch gekennzeichnet, dass** die thixotropierenden Zusätze ausgewählt sind aus Fasern, Mikrohohlkugeln aus Glas, anorganischen oder organischen Siliziumderivaten.

6. Beschichtungsmaterial nach einem der Ansprüche 1 bis 5, **dadurch gekennzeichnet, dass** die haftverbessernden Zusätze ausgewählt sind aus Fettaminen, Klebeharzen und Wachsen.

7. Beschichtungsmaterial nach einem der Ansprüche 1 bis 6, **dadurch gekennzeichnet, dass** die Viskositätsregler ausgewählt sind aus Polyethylenglykolen, Etheralkoholen, Polyether und höhersiedenden Kohlenwasserstoffen.

8. Verwendung des Beschichtungsmaterials nach einem der Ansprüche 1 bis 7 zur feuchtigkeitsisolierenden Beschichtung von Flächen wie Wänden, Decken, Dämmen, Kanälen, Böden, Brücken, Straßen oder sonstigen Verkehrsflächen, Blechen (Fassadenbleche z.B.), Wärmedämmelementen oder Matten und/oder Verschließen von Fugen und Spalten.

9. Verwendung nach Anspruch 8, **dadurch gekennzeichnet, dass** das Beschichtungsmaterial gleichzeitig als Haftmittel für an den Flächen anzubringende Wärmedämmplatte verwendet wird.

10. Verwendung nach Anspruch 8 oder 9, **dadurch gekennzeichnet, dass** das Beschichtungsmaterial gleichzeitig als Korrosionsschutzbeschichtung verwendet wird.

11. Verfahren zur Aufbringung des Beschichtungsmaterials nach einem der Ansprüche 1 bis 7 auf eine Oberfläche, **dadurch gekennzeichnet, dass** die erste und die zweite Komponente getrennt von einander zu einem Mischer gefördert werden und in diesem vermischt werden und dass die Mischung aus den Komponenten von einer Sprühdüse auf die Oberfläche gesprüht wird.

12. Verfahren nach Anspruch 11, **dadurch gekennzeichnet, dass** der Mischer Teil der Sprühdüse ist und die Komponenten in der Sprühdüse vermischt werden.

13. Verfahren nach Anspruch 11 oder 12, **dadurch gekennzeichnet, dass** die Komponenten aus Kartuschen gefördert und einem Statikmischeraufsatz zugeführt werden.

## Claims

1. Two-component coating material curing reactively without evaporation of solvent and with evaporation of not more than 15%, based on total mass, of water, **characterized in that** the first component contains 20 to 70%, based on partial mass, of bitumen or natural asphalt powder, 10 to 60%, based on partial mass, of plasticizing nonvolatile oil, 2 to 20%, based on partial mass, of fillers, 0.1 to 5%, based on partial mass, of thixotropic additives, 0.1 to 5%, based on partial mass, of adhesion-improving additives and 0 to 5%, based on partial mass, of viscosity regulator, and the second component contains 20 to 80%, based on partial mass, of synthetic latex or natural latex, polyvinyl acetate or acrylate, paraffin or wax emulsion, 10 to 50%, based on partial mass, of water, glycerol or glycol and 0 to 30%, based on partial mass, of aqueous silicate or phosphate solution, and **in that** the first component and the second component are present in a mixing ratio of 100:1 to 30 parts by mass.

2. Two-component coating material curing reactively without evaporation of solvent and with evaporation of not more than 15%, based on total mass, of water, **characterized in that** the first component contains a 60 to 70% strength mixture of bitumen with water in an amount of 50 to 100%, based on partial mass, 0 to 50%, based on partial mass, of synthetic latex or natural latex, polyvinyl acetate or acrylate, paraffin or wax emulsion and 0 to 10%, based on partial mass, of viscosity regulator, thixotropic additives and/or adhesion-improving additives and the second component contains 20 to 50%, based on partial mass, of fillers, 40 to 80%, based on partial mass, of plasticizing nonvolatile oil and 0 to 10%, based on partial mass, of viscosity regulator, dispersants and/or wetting agents for oily phases, and **in that** the first component and the second component are present in a mixing ratio of 100:10 to 50 parts by mass.

3. Coating material according to Claim 1 or 2, **characterized in that** the plasticizing nonvolatile oil is a mineral oil, a vegetable oil or a derivative derived therefrom or a synthetic oil.

4. Coating material according to Claim 1, 2 or 3, **characterized in that** the fillers are selected from rock flour, talc, cement, lime powder, gypsum, fly ash cement and slag powder from iron or steel production.

5. Coating material according to any of Claims 1 to 4, **characterized in that** the thixotropic additives are selected from fibres, hollow microspheres of glass, inorganic or organic silicon derivatives.

6. Coating material according to any of Claims 1 to 5, **characterized in that** the adhesion-improving additives are selected from fatty amines, adhesive resins and waxes.

7. Coating material according to any of Claims 1 to 6, **characterized in that** the viscosity regulators are selected from polyethylene glycols, ether alcohols, polyethers and relatively high-boiling hydrocarbons.

8. Use of the coating material according to any of Claims 1 to 7 for the moisture-insulating coating of surfaces, such as walls, ceilings, dams, canals, floors, bridges, roads and other traffic surfaces, metal sheets (e.g. metal facade panels), heat-insulating elements or mats, and/or for closing joints and gaps.

9. Use according to Claim 8, **characterized in that** the coating material is simultaneously used as an adhesive for a heat-insulating panel to be applied to the surfaces.

10. Use according to Claim 8 or 9, **characterized in that** the coating material is simultaneously used as a corrosion-inhibiting coating.

11. Process for the application of the coating material according to any of Claims 1 to 7 to a surface, **characterized in that** the first and the second component are transported separately from one another to a mixer and are mixed therein, and **in that** the mixture of the components is sprayed by a spray nozzle onto the surface.

12. Process according to Claim 11, **characterized in that** the mixer is part of the spray nozzle and the components are mixed in the spray nozzle.

13. Process according to Claim 11 or 12, **characterized in that** the components are transported from cartridges and are fed to a static mixer attachment.

## Revendications

1. Matériau de recouvrement durcissable et réactif sans évaporation de solvant et avec une évaporation maximale de 15% d'eau par rapport à la masse totale, à deux composants, **caractérisé en ce que** le premier composant renferme 20 à 70% en masse partielle de bitumes ou poudre d'asphalte naturel, 10 à 60% en masse partielle d'huile ramollissante non fluide, 2 à 20% en masse partielle de charges, 0,1 à 5 % en masse partielle d'additifs thixotropiques, 0,1 à 5% en masse partielle d'additifs d'amélioration de l'adhérence ainsi que 0 à 5% en masse partielle de régulateurs de viscosité, et le second composant renferme 20 à 80% en masse partielle de latex synthétique ou de latex naturel, de l'acétate ou de l'acrylate de polyvinyle, de la paraffine ou de l'émulsion de cire, 10 à 50% en masse partielle d'eau, de glycérine ou glycol et 0 à 30% en masse de solution aqueuse de silicate ou de phosphate et **en ce que** le rapport de mélange entre le premier composant et le second composant est de 100 : 1 à 30, en parties en masse.

2. Matériau de recouvrement durcissable et réactif sans évaporation de solvant et avec une évaporation maximale de 15% d'eau par rapport à la masse totale, à deux composants, **caractérisé en ce que** le premier composant renferme un mélange à 60 à 70% de bitumes dans l'eau qui représente 50 à 100% en masse partielle, 0 à 50% en masse partielle de latex synthétique ou de latex naturel, de l'acétate ou de l'acrylate de polyvinyle, de la paraffine ou de l'émulsion de cire et 0 à 10% en masse partielle d'additifs régulateurs de viscosité, thixotropiques et/ou des additifs d'amélioration de l'adhérence et le second composant renferme 20 à 50% en masse partielle de charges, 40 à 80% en masse partielle d'huile ramollissante non fluide et 0 à 10% en masse partielle de régulateurs de viscosité, des agents de dispersion et/ou produits mouillants pour phases huileuses et **en ce que** le rapport de mélange entre le premier composant et le second composant est de 100 : 10 à 50 en parties en masse.

3. Matériau de recouvrement selon la revendication 1 ou 2, **caractérisé en ce que** l'huile ramollissante non fluide est une huile minérale, une huile végétale ou l'un de ses dérivés ou une huile synthétique.

4. Matériau de recouvrement selon la revendication 1, 2 ou 3, **caractérisé en ce que** les charges sont choisies parmi la poudre de pierre, le talc, le ciment, la poudre de calcaire, le plâtre, le ciment de cendres volantes et la poudre de scories provenant de la fabrication du fer ou de l'acier.

5. Matériau de recouvrement selon l'une des revendications 1 à 4, **caractérisé en ce que** les additifs thixotropiques sont choisis parmi les fibres, les microbilles creuses de verre, les dérivés du silicum inorganiques ou organiques.

6. Matériau de recouvrement selon l'une des revendications 1 à 5, **caractérisé en ce que** les additifs d'amélioration de l'adhérence sont choisis parmi les amines grasses, les résines de collage et les cires.

7. Matériau de recouvrement selon l'une des revendications 1 à 6, **caractérisé en ce que** les additifs de réglage de la viscosité sont choisis parmi les polyéthylène glycols, les éthers alcools, les polyéthers et les hydrocarbures à haut point d'ébullition.

8. Utilisation d'un matériau de recouvrement selon l'une des revendications 1 à 7, pour le recouvrement en vue de l'isolation à l'égard de l'humidité de surfaces, telle que parois, plafonds, digues, canaux, sols, ponts, routes et autres surfaces de circulation, tôles (par exemple tôles de façades), éléments d'isolation thermique ou nattes et/ou pour l'obturation de joints ou fissures.

9. Utilisation selon la revendication 8, **caractérisé en ce que** le matériau de recouvrement est utilisé simultanément en tant que produit d'accrochage pour des plaques d'isolation thermique sur lesdites surfaces.

10. Utilisation selon la revendication 8 ou 9, **caractérisé en ce que** le matériau de recouvrement est utilisé simultanément en tant que revêtement anti-corrosion.

11. Procédé pour appliquer le matériau de recouvrement selon l'une des revendications 1 à 7 sur une surface, **caractérisé en ce que** le premier et le second composant sont acheminés séparément vers un mélangeur et sont mélangés dans celui-ci et **en ce que** le mélange des composants est dispersé sur la surface au moyen d'une buse de dispersion.

12. Procédé selon la revendication 11, **caractérisé en ce que** le mélangeur est une partie de la buse de dispersion et les composants sont mélangés dans la buse de dispersion.

13. Procédé selon la revendication 11 ou 12, **caractérisé en ce que** les composants sont acheminés à partir de cartouches qui sont raccordées à un embout d'un mélangeur statique.
